# EUROPÄISCHE PATENTSCHRIFT

(11) **EP 2 468 025 B1**
(45) Veröffentlichungstag und Bekanntmachung des Hinweises auf die Patenterteilung: **18.12.2013**
(21) Anmeldenummer: 10742829.4
(22) Anmeldetag: 16.08.2010
(51) Int. Cl.: H04W 12/08

(54) **VERFAHREN UND VORRICHTUNG ZUM ENTFERNTEN VERWALTEN DER NUTZUNG EINER PRIVATEN FUNKZELLE DURCH EIN UNBEKANNTES ENDGERÄT**
METHOD AND DEVICE FOR MANAGING A PRIVATE RADIO CELL
PROCÉDÉ ET DISPOSITIF POUR GÉRER UNE CELLULE DE RADIOTÉLÉPHONIE PRIVÉE

(30) Priorität: 17.08.2009 DE 102009037761
(43) Veröffentlichungstag der Anmeldung: 27.06.2012
(73) Patentinhaber: Giesecke & Devrient GmbH, 81677 München (DE)
(72) Erfinder: SCHRÖDER, Sönke, 80637 München (DE)
(86) Internationale Anmeldenummer: PCT/EP2010/061896
(87) Internationale Veröffentlichungsnummer: WO 2011/020816

(56) Entgegenhaltungen:
- WO-A1-2007/040449
- WO-A2-2009/045335
- US-A1- 2008 076 386
- US-A1- 2009 119 762

## Beschreibung

Die Erfindung betrifft ein Verfahren und eine Vorrichtung zum entfernten Verwalten einer privaten Funkzelle, die an ein öffentliches Funknetzwerk angeschlossen ist. Die Erfindung betrifft ferner einen Zugangsrechner für eine private Funkzelle sowie ein Endgerät.

Eine private Funkzelle umfasst eine Sende- und Empfangsstation, die in verhältnismäßig kleinen, privaten Bereichen, wie z.B. einem Gebäude, zum Einsatz kommt und ein Funknetzwerk eines öffentlichen Mobilfunkbetreibers erweitert. Die Nutzung der privaten Funkzelle ist mit Geräten entsprechenden Kommunikationsstandards möglich. Der Nutzen einer privaten Funkzelle liegt u.a. in der Erschließung funktechnisch schwierig erreichbarer Orte, aber auch in der Kapazitätserweiterung in bereits versorgten Gebieten. Die Anbindung der privaten Funkzelle an das öffentliche Funknetzwerk des Mobilfunkbetreibers erfolgt üblicherweise über bestehende private Anschlüsse, wodurch der Anbieter des öffentlichen Funknetzwerks Kosten für Mietleitungen spart.

Die Verwaltung einer derartigen privaten Funkzelle erfolgt typischerweise durch einen Administrator, welcher mit einer Steuereinheit (z.B. einem Gateway-Rechner) der privaten Funkzelle verbunden ist. Zur Verwaltung der privaten Funkzelle ist die Anwesenheit des Administrators am Rechner erforderlich, um z.B. einem, der Funkzelle unbekannten Endgerät die Nutzung der privaten Funkzelle zu ermöglichen.

Eine private Funkzelle in einem UMTS (Universal Mobile Telecommunication System)-Kommunikationsnetzwerk ist als Femtozelle bekannt, deren Nutzung mit jedem 3G (3rd Generation)- bzw. UMTS-fähigen Telefon möglich ist. Eine solche Femtozelle wird ergänzend in öffentliche Mobilfunknetzwerke eingebunden, so dass eine unterbrechungsfreie Übergabe von Verbindungen zwischen der Femtozelle und dem UMTS-Netzwerk erfolgt Die Anbindung an das UMTS-Netzwerk erfolgt meist über einen Breitband-Intemetanschluss. Die Femtozelle wird hierbei kabelgebunden an ein privates Internetgateway, in der Regel in der Gestalt eines DSL-Modems, angebunden.

Das Dokument D1 (US2009/119762) beschreibt ein Netzwerkzugangssystem, mit dem der Zugang eines WLAN-Clients zu einem WLAN in Abhängigkeit der Position des WLAN-Clients gesteuert werden kann. Hierzu enthält das Netzwerkzugangssystem eine zentrale Steuereinheit ("central controller") 42 in Kommunikation mit einem Positionsserver ("location server") 22, der Informationen über die Position eines WLAN-Clients enthält und dazu ausgestaltet ist, die Entscheidung "Zugang zum WLAN ja/nein?" zu treffen. Abhängig von dieser Entscheidung des Positionsservers 22 gibt die zentrale Steuereinheit 42 den Zugang des WLAN-Clients zu einem WLAN frei oder nicht.

Es ist Aufgabe der vorliegenden Erfindung, ein Verfahren und eine Vorrichtung anzugeben, welche eine verbesserte Verwaltung einer privaten Funkzelle erlauben. Darüber hinaus sollen ein Zugangsrechner, ein Endgerät und eine Vorrichtung angegeben werden, welche die Administrierung einer privaten Funkzelle erleichtern.

Diese Aufgaben werden gelöst durch den Gegenstand der unabhängigen Ansprüche.

Die Erfindung schafft ein Verfahren zum entfernten Verwalten einer privaten Funkzelle, die an ein öffentliches Funknetzwerk angeschlossen ist. Bei dem Verfahren authentisiert sich ein, der Funkzelle unbekanntes Endgerät gegenüber einem Zugangsrechner der privaten Funkzelle. Der Zugangsrechner überträgt nach erfolgter Authentisierung des unbekannten Endgeräts eine erste Nachricht an ein, die private Funkzelle verwaltendes Kommunikationsgerät, in Form eines Mobilfunkendgeräts mit welcher die Nutzung der privaten Funkzelle durch das unbekannte Endgerät oder einer mit der privaten Funkzelle verknüpften Anlage beantragt wird. Der Zugangsrechner kann beispielsweise ein Router der Funkzelle sein. Das verwaltende Kommunikationsgerät überträgt eine die Nutzung erlaubende zweite Nachricht an den Zugangsrechner, wenn der beantragten Nutzung der privaten Funkzelle durch das unbekannte Endgerät oder dessen Benutzer entsprochen wird. Die beantragte Nutzung der privaten Funkzelle wird durch das unbekannte Endgerät oder dessen Benutzer verweigert, wenn dieser durch das Kommunikationsgerät nicht entsprochen wird.

Die Verweigerung der Benutzung der privaten Funkzelle durch das unbekannte Endgerät kann z.B. dadurch erfolgen, dass in der zweiten Nachricht, welche von dem verwaltenden Kommunikationsgerät an den Zugangsrechner oder das unbekannte Endgerät übertragen wird, die entsprechende Verweigerung in Gestalt eines Datums übermittelt wird.

Das erfindungsgemäße Verfahren erlaubt die Nutzung bzw. die Freigabe einer privaten Funkzelle auch bei Abwesenheit des Besitzers bzw. Administrators, da zur Verwaltung einer Zugangsberechtigung die Daten zwischen herkömmlichen Mobilfunkendgeräten ausgetauscht werden können.

Gemäß einer zweckmäßigen Ausgestaltung umfasst das unbekannte Endgerät, beispielsweise ein erstes Mobilfunkendgerät, eine erste Applikation, welche den Authentisierungsvorgang gegenüber dem Zugangsrechner der privaten Funkzelle verwaltet Dabei ist es insbesondere zweckmäßig, wenn die Applikation auf einem sicheren tragbaren Datenträger des unbekannten Endgeräts gespeichert ist Als tragbarer Datenträger kann beispielsweise eine SIM-Karte (SIM = Subscriber Identity Module) verwendet werden. Ebenso ist die Verwendung einer sicheren Chipkarte denkbar.

Gemäß einer weiteren Ausgestaltung umfasst das verwaltende Kommunikationsgerät, beispielsweise das Mobilfunkendgerät des Administrators der privaten Funkzelle, eine zweite Applikation, welche eine Zugangserlaubnis zu der privaten Funkzelle und/ oder zu der Nutzung der Funkzelle zugelassene Endgeräte verwaltet. Die Zugangserlaubnis zu der privaten Funkzelle kann hierbei automatisiert durch das verwaltende Kommunikationsgerät oder manuell durch den Benutzer des das private Funknetz verwaltenden Kommunikationsgeräts erfolgen.

Es ist weiterhin vorgesehen, dass zur Authentisierung des unbekannten Endgeräts oder dessen Benutzer durch den Zugangsrechner Daten des unbekannten Endgeräts und/oder persönlichen Daten des Benutzers des unbekannten Endgeräts an den Zugangsrechner übertragen und durch diesen verarbeitet werden. Die gesamte Authentisierungsprozedur findet somit zwischen dem unbekannten Endgerät und dem Zugangsrechner des privaten Funknetzes statt. Dem verwaltenden Kommunikationsgerät wird die Anfrage zur Nutzungserlaubnis dann übertragen, wenn die Authentisierung erfolgreich verlief. Durch das verwaltende Kommunikationsgerät bzw. dessen Nutzer muss somit lediglich noch entschieden werden, ob dem unbekannten Endgerät die Nutzung des privaten Funknetzes erlaubt wird oder nicht.

Gemäß einer weiteren zweckmäßigen Ausgestaltung werden gegenüber dem Zugangsrechner authentisierte Endgeräte in einer Liste des Zugangsrechners gespeichert. Hierdurch kann die Administration der berechtigten Endgeräte auf einfache Weise durchgeführt werden.

Eine weitere Ausgestaltung sieht vor, dass während des Authentisierungsvorgangs durch das dem Zugangsrechner noch unbekannte Endgerät eine Codeabfrage erfolgt. Erst nach korrekter Eingabe des Codes durch den Benutzer des noch unbekannten Endgeräts wird die Authentisierung positiv abgeschlossen, wodurch dem Endgerät bzw. dessen Benutzer die Nutzung der privaten Funkzelle erlaubt und/ oder der Zugang zu der Anlage erlaubt wird. Im letzteren Fall kann hierdurch beispielsweise der Zugang zu Anlagen mit einem gestohlenen Endgerät verhindert werden. Zur weiteren Erhöhung der Sicherheit ist es hierbei zweckmäßig, wenn die zur Authentisierung erforderlichen Daten des Endgeräts auf einem gesicherten tragbaren Datenträger gespeichert werden.

Zweckmäßigerweise wird der Zugangsrechner als Bestandteil der mit der privaten Funkzelle verknüpften Anlage betrieben. Bei einer solchen Anlage kann es sich insbesondere um ein Zugangskontrollsystem handeln, welches den Zugang zu einem geschützten Bereich nur dann freigibt, wenn das unbekannte Endgerät sich innerhalb eines von der privaten Funkzelle abgedeckten Bereichs befindet oder von dieser als nutzungsberechtigt erkannt wurde. Hierdurch ergibt sich eine Erhöhung der Sicherheit sowie eine vereinfachte Zugangskontrolle für Gebäude und Räume durch die Einbindung des Zugangsrechners in die mit der privaten Funkzelle verknüpften Anlage.

Es ist weiterhin zweckmäßig, wenn durch ein bereits authentisiertes Endgerät die mit der privaten Funkzelle verknüpfte Anlage wiederholt genutzt oder betreten wird, der Zugangsrechner bei jeder Nutzung oder bei jedem Zutritt eine zweite Nachricht an das verwaltende Kommunikationsgerät zur Information des Administrators überträgt. Hierdurch können besonders sicherheitsrelevante Anlagen verbessert geschützt werden. Beispielsweise ist dies bei längerer Abwesenheit sinnvoll. Insgesamt wird die Sicherheit einer Zugangskontrolle für Gebäude oder Räume verbessert.

In einer weiteren Ausgestaltung werden in der ersten Nachricht, welche von dem unbekannten Endgerät an den Zugangsrechner der privaten Funkzelle übertragen wird, zusätzlich Bilddaten an den Zugangsrechner übertragen.

Gemäß einer weiteren zweckmäßigen Ausgestaltung ist die verwaltete Funkzelle eine Femtozelle, d.h. eine private UMTS-Funkzelle, deren Nutzung mit jedem 3G- bzw. UMTS-fähigen Telefon möglich ist

Eine weitere zweckmäßige Ausgestaltung sieht vor, dass die private Funkzelle über eine drahtbehaftete und/oder drahtlose Kommunikationsverbindung an das öffentliche Mobilfunknetzwerk angeschlossen ist. Die Kommunikationsverbindung zwischen der privaten Funkzelle und dem öffentlichen Funknetzwerk kann beispielsweise über eine DSL-Verbindung über das Internet erfolgen.

Die Erfindung schafft ferner einen Zugangsrechner für eine private Funkzelle, die an ein öffentliches Funknetzwerk angeschlossen ist. Der erfindungsgemäße Zugangsrechner ist dazu ausgebildet, ein, der Funkzelle unbekanntes Endgerät zu authentisieren und nach erfolgter Authentisierung des unbekannten Endgeräts eine erste Nachricht an ein, die private Funkzelle verwaltendes Kommunikationsgerät in Form eines Mobilfunkendgeräts zu übertragen, mit welcher ersten Nachricht die Nutzung der privaten Funkzelle durch das unbekannte Endgerät oder einer mit der privaten Funkzelle verknüpften Anlage beantragt wird. Der Zugangsrechner ist weiter dazu ausgebildet, eine von dem verwaltenden Kommunikationsgerät ausgesendete zweite Nachricht zu empfangen und abhängig von dieser der beantragten Nutzung der privaten Funkzelle durch das unbekannte Endgerät oder dessen Benutzer zu entsprechen oder die Nutzung zu verweigern.

Ein erfindungsgemäßes Endgerät zeichnet sich dadurch aus, dass dieses dazu ausgebildet ist, sich gegenüber einem Zugangsrechner einer privaten Funkzelle, die an ein öffentliches Funknetzwerk angeschlossen ist, zu authentisieren.

Eine erfindungsgemäße Vorrichtung zum entfernten Verwalten einer privaten Funkzelle, die an ein öffentliches Funknetzwerk angeschlossen ist, umfasst einen erfindungsgemäßen Zugangsrechner sowie ein Kommunikationsgerät zum Verwalten der privaten Funkzelle in Form eines Mobilfunkendgeräts sowie ein Endgerät der oben beschriebenen Art.

Die Erfindung wird nachfolgend näher anhand eines Ausführungsbeispiels erläutert.

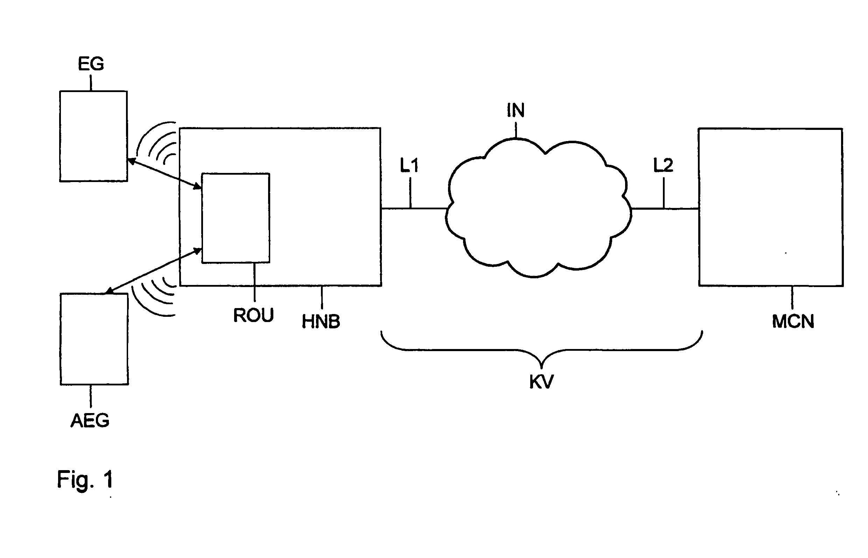

Die einzige Figur zeigt in einer schematischen Darstellung eine erfindungsgemäße Vorrichtung zum entfernten Verwalten einer privaten Funkzelle HNB, die über eine Kommunikationsverbindung KV an ein öffentliches Funknetzwerk MCN angeschlossen ist. Bei dem öffentlichen Funknetzwerk MCN handelt es sich beispielsweise um ein UMTS-Mobilfunknetzwerk (UMTS - Universal Mobile Telecommunication System). Die private Funkzelle wird dann als Femtozelle bezeichnet, die z.B. gemäß dem Standard 3GPP TS 33.820 ausgebildet ist und in diesem Home (e)NodeB bzw. H(e)NB genannt wird. Die Femtozelle ermöglicht die Nutzung eines 3G- bzw. UMTSfähigen Telefons in dem von der Funkzelle abgedeckten Bereich (z.B. einem Gebäude), wodurch das öffentliche Funknetzwerk MCN eines Mobilfunkbetreibers erweitert wird. Die Femtozelle HNB ist beispielsweise über eine DSL-Leitung L1 mit dem Internet IN verbunden. Das Internet IN ist über eine weitere Kommunikationsverbindung L2, die drahtloser oder drahtbehafteter Natur sein kann, mit dem öffentlichen Funknetzwerk MCN verbunden.

Die Femtozelle HNB wird durch einen Administrator verwaltet, der sich im Besitz eines verwaltenden Kommunikationsgeräts AEG in Form eines Mobilfunkendgeräts befindet. Das verwaltende Kommunikationsgerät AEG ist beispielsweise ein 3G- oder UMTS-fähiges Kommunikationsgerät, welches drahtlos mit einem Zugangsrechner ROU, beispielsweise einem Femtozellen-Router, der privaten Funkzelle HNB kommunizieren kann.

Mit dem nachfolgend beschriebenen Verfahren wird es dem Benutzer des verwaltenden Kommunikationsgeräts A-EG ermöglicht, die Nutzung der privaten Funkzelle HNB durch ein unbekanntes Endgerät EG, z.B. einem 3G-oder UMTS-fähigen Kommunikationsgerät, durch entfernte Verwaltung zu ermöglichen. Auf dem unbekannten Endgerät EG, welchem die Nutzung der Femtozelle HNB ermöglicht werden soll, ist hierzu eine Applikation gespeichert, welche eine Kommunikation mit dem Zugangsrechner ROU bezüglich einer Nutzungserlaubnis ermöglicht. Die Applikation ist vorzugsweise auf einer gesicherten SIM-Karte (SIM = Subscriber Identity Module) des unbekannten Endgeräts EG gespeichert. Möchte sich der Nutzer des der Femtozelle unbekannten Endgeräts EG gegenüber dem Zugangsrechner ROU gegenüber authentisieren, so wird eine entsprechende Anfrage von dem unbekannten Endgerät EG an den Zugangsrechner ROU übertragen.

Der Zugangsrechner ROU empfängt die Anfrage, vorzugsweise einschließlich persönlicher Daten des Nutzers, und registriert die Authentisierungsdaten des unbekannten Endgeräts EG. Der Zugangsrechner ROU leitet die Anfrage, z.B. in Form einer SMS-Nachricht direkt, d.h. innerhalb der Femtozelle oder über die Kommunikationsverbindung KV und das öffentliche Funknetzwerk an das Kommunikationsgerät AEG weiter. Möchte der Administrator dem unbekannten Endgerät EG die Nutzung der Femtzozelle erlauben, so kann er dies durch eine Bestätigungsnachricht, beispielsweise eine SMS-Nachricht, tun, die an den Zugangsrechner ROU und/oder das unbekannte Endgerät EG übertragen wird. Hierbei kann die Nutzung einmalig oder auch generell erlaubt werden. Möchte der Administrator die Nutzung der Femtozelle durch das Endgerät EG nicht erlauben, so wird die Nutzung verweigert, was durch eine entsprechende Nachricht des Kommunikationsgeräts AEG an den Zugangsrechner ROU und/oder das unbekannte Endgerät EG erfolgen kann.

Vorzugsweise ist auf dem Kommunikationsgerät AEG des Administrators der Femtozelle HNB eine Applikation gespeichert, welche es ermöglicht, den Zugangsrechner ROU oder die Funkschnittstelle zwischen berechtigten Endgeräten und der Femtozelle HNB zu verwalten. Insbesondere wird hierdurch dem Administrator des Kommunikationsgeräts AEG die Möglichkeit gegeben, über sein Kommunikationsgerät AEG alle Funktionen einschließlich der Liste der zugelassenen Benutzer zu der Femtozelle HNB zu verwalten.

Dieses Verfahren erlaubt es insbesondere, auch bei Abwesenheit des Besitzers bzw. Administrators der Femtozelle HNB diese zu verwalten und unbekannten Nutzern bzw. Endgeräten die Nutzung der Femtozelle zu ermöglichen oder zu verweigern.

Das erfindungsgemäße Verfahren kann auch zur Verwaltung einer mit der privaten Funkzelle verknüpften Anlage, beispielsweise einem Zugangskontrollsystem zu einem Gebäude oder Raum, verwendet werden. Ebenso kann es sich bei der Anlage um eine Alarmanlage handeln. Der Zugangsrechner stellt hierbei einen Bestandteil der mit der Funkzelle verknüpften Anlage dar, welcher eine Zugangserlaubnis via Fernabfrage beim Besitzer der Funkzelle bzw. dessen verwaltendem Kommunikationsgerät erfragt.

Beispielsweise fragt der um Nutzungserlaubnis anfragende Benutzer des unbekannten Endgeräts EG um eine Zugangserlaubnis für ein Gebäude bzw. einen Raum an. Dies kann beispielsweise durch Ausführung der in dem unbekannten Endgerät EG gespeicherten, entsprechenden Applikation erfolgen, welche eine Anfrage-Nachricht an den Zugangsrechner ROU überträgt. Alternativ kann der Benutzer einen Klingelknopf am Gebäude oder dem Raum betätigen, wodurch die Anfrage-Nachricht erzeugt und an den Zugangsrechner ROU übertragen wird. Der Zugangsrechner ROU empfängt die Anfrage einschließlich den persönlichen Daten des Benutzers bzw. dessen unbekannten Endgeräts EG. Insbesondere registriert der Zugangsrechner ROU die Authentisierungsdaten des unbekannten Endgeräts EG, die z.B. auf dessen sicheren tragbaren Datenträger (SIM-Karte) gespeichert sind und leitet die Anfrage direkt oder über die Kommunikationsverbindung KV an das verwaltende Kommunikationsgerät AEG des Administrators der Anlage weiter, sofern in dem Zugangsrechner ROU noch keine Nutzungserlaubnis für den Benutzer bzw. dessen unbekannten Endgeräts EG gespeichert ist. Bei positiver Bestätigung durch den Administrator über sein Kommunikationsgerät AEG wird der Zugang für den Benutzer des unbekannten Endgeräts EG freigegeben. Bei negativer Bestätigung wird der Zugang zu der Anlage verweigert.

Zur Erhöhung der Sicherheit kann zur Kontrolle beispielsweise unter Verwendung einer MMS (Multimedia Service) ein aktuelles Foto bzw. Video des Eingangsbereichs mit übersandt werden. Dieses Verfahren erlaubt die Zugangskontrolle für Personen, welche nicht oder noch nicht in einem Speicher des Zugangsrechners ROU hinterlegt sind.

Der Zugangsrechner kann auch als Bestandteil einer Alarmanlage für ein Gebäude oder einen Raum eingesetzt werden, wobei der Zugang nur dann freigegeben wird, wenn ein bestimmtes Endgerät sich innerhalb eines Funkbereichs der privaten Funkzelle aufhält und authentisiert ist. Auf diese Weise kann die Sicherheit für Alarmanlagen erhöht werden. Darüber hinaus ergibt sich eine vereinfachte Zugangskontrolle für Gebäude und Räume. Der Zugang für ein Gebäude oder einen Raum ist nur dann möglich, wenn ein entsprechend für den Zutritt freigegebenes Endgerät von dem Zugangsrechner registriert wurde. Die freigegebenen Endgeräte können z.B. in einer Liste in der TrE (Trusted Environment) oder im HPM (Hosting Party Module) des Zugangsrechners ROU gespeichert bzw. administriert werden.

Die eigentliche Zugangskontrolleinheit, wie z.B. ein elektrisches Türschloss, oder eine Alarmanlage, ist über eine Kommunikationsverbindung mit dem Zugangsrechner ROU verbunden. Die Kommunikationsverbindung kann wahlweise über ein USB-Kabel, eine LAN-, eine WLAN- oder eine WUSB-Verbindung erfolgen. Wie aus der vorangegangenen Beschreibung ersichtlich wurde, wird der Zugangsrechner ROU lediglich zur Authentisierung verwendet, während die eigentliche Zugangskontrolle durch die Zugangskontrolleinheit erfolgt.

Zur Erhöhung der Sicherheit kann zusätzlich eine PIN-Abfrage in dem Endgerät erfolgen. Erst nach korrekter Eingabe wird der Zugang freigegeben. Dies verhindert z.B. den Zugang zu Gebäuden/Räumen mit einem gestohlenen Endgerät EG. Die zur Authentisierung erforderlichen Daten des Endgeräts EG werden aus Sicherheitsgründen zweckmäßigerweise auf der sicheren SIM-Karte gespeichert. Die Authentisierung erfolgt zweckmäßigerweise entsprechend den bei 3GPP üblichen Spezifikationen, wie diese beispielsweise in der TS Spezifikation 33.820 veröffentlicht sind.

In besonders sicherheitsrelevanten Bereichen kann beispielsweise bei jedem Zugang zu dem geschützten Bereich durch den Zugangsrechner eine Nachricht an den Administrator der privaten Funkzelle übertragen werden. Beispielsweise kann dies bei längerer Abwesenheit, wie z.B. einem Urlaub, sinnvoll sein. Diese regelmäßig übertragene Nachricht kann als SMS-Nachricht ausgebildet sein und entweder direkt von dem Zugangsrechner ROU an das verwaltende Kommunikationsgerät AEG oder über die Kommunikationsverbindung KV und das öffentliche Funknetzwerk an dieses übertragen werden.

## Patentansprüche

1. Verfahren zum entfernten Verwalten einer privaten Funkzelle (HNB), die an ein öffentliches Funknetzwerk (MCN) angeschlossen ist, bei dem
- sich ein, der Funkzelle unbekanntes, Endgerät (EG) gegenüber einem Zugangsrechner (ROU) der privaten Funkzelle (HNB) authentisiert;
- der Zugangsrechner (ROU) nach erfolgter Authentisierung des unbekannten Endgeräts (EG) eine erste Nachricht an ein die private Funkzelle (HNB) verwaltendes mobiles Kommunikationsgerät (AEG) überträgt, mit welcher ersten Nachricht die Nutzung der privaten Funkzelle (HNB) durch das unbekannte Endgerät (EG) oder einer mit der privaten Funkzelle (HNB) verknüpften Anlage beantragt wird, wobei der Zugangsrechner (ROU) dazu ausgestaltet ist, die erste Nachricht innerhalb der privaten Funkzelle (HNB) oder über das öffentliche Funknetzwerk (MCN) an das verwaltende mobile Kommunikationsgerät (AEG) zu übertragen;
- das verwaltende mobile Kommunikationsgerät (AEG) eine die Nutzung erlaubende zweite Nachricht an den Zugangsrechner (ROU) oder das unbekannte Endgerät (EG) überträgt, wenn der beantragten Nutzung der privaten Funkzelle (HNB) durch das unbekannte Endgerät (EG) oder dessen Benutzer entsprochen wird; und
- die beantragte Nutzung der privaten Funkzelle (HNB) durch das unbekannte Endgerät (EG) oder dessen Benutzer verweigert wird, wenn dieser durch das mobile Kommunikationsgerät (AEG) nicht entsprochen wird, wobei es sich bei dem mobilen Kommunikationsgerät (AEG) um ein Mobilfunkendgerät handelt.

2. Verfahren nach Anspruch 1, bei dem das unbekannte Endgerät (EG) eine erste Applikation umfasst, welche den Authentisierungsvorgang gegenüber dem Zugangsrechner (ROU) der privaten Funkzelle (HNB) verwaltet.

3. Verfahren nach Anspruch 2, bei dem die Applikation auf einem sicheren tragbaren Datenträger des unbekannten Endgeräts gespeichert ist.

4. Verfahren nach einem der vorhergehenden Ansprüche, bei dem das verwaltende Kommunikationsgerät (AEG) eine zweite Applikation umfasst, welche eine Zugangserlaubnis zu der privaten Funkzelle (HNB) und/oder zu der Nutzung der Funkzelle zugelassene Endgeräte (EG) verwaltet.

5. Verfahren nach einem der vorhergehenden Ansprüche, bei dem zur Authentisierung des unbekannten Endgeräts (EG) oder dessen Benutzer durch den Zugangsrechner (ROU) Daten des unbekannten Endgeräts (EG) und/oder persönliche Daten des Benutzers des unbekannten Endgeräts (EG) an den Zugangsrechner (ROU) übertragen und durch diesen verarbeitet werden.

6. Verfahren nach einem der vorhergehenden Ansprüche, bei dem gegenüber dem Zugangsrechner (ROU) authentisierte Endgeräte (EG) in einer Liste des Zugangsrechners (ROU) gespeichert werden.

7. Verfahren nach einem der vorhergehenden Ansprüche, bei dem während des Authentisierungsvorgangs durch das dem Zugangsrechner (ROU) noch unbekannte Endgerät (EG) eine Codeabfrage erfolgt.

8. Verfahren nach einem der vorhergehenden Ansprüche, bei dem der Zugangsrechner (ROU) als Bestandteil der mit der privaten Funkzelle (HNB) verknüpften Anlage betrieben wird.

9. Verfahren nach Anspruch 8, bei dem die Anlage ein Zugangskontrollsystem ist, das mit der privaten Funkzelle (HNB) verknüpft ist.

10. Verfahren nach Anspruch 8 oder 9, bei dem der Zugangsrechner (ROU) bei jeder Nutzung oder bei jedem Zutritt eine zweite Nachricht an das verwaltende Kommunikatiönsgerät (AEG) zur Information des Administrators übertragen wird, wenn durch ein bereits authentisiertes Endgerät (EG) wiederholt die mit der privaten Funkzelle verknüpfte Anlage wiederholt genutzt oder betreten wird.

11. Verfahren nach einem der Ansprüche 8 bis 10, bei dem in der ersten Nachricht zusätzlich Bilddaten an den Zugangsrechner (ROU) übertragen werden.

12. Verfahren nach einem der vorhergehenden Ansprüche, bei dem die verwaltete Funkzelle eine Femtozelle ist.

13. Verfahren nach einem der vorhergehenden Ansprüche, bei dem die private Funkzelle (HNB) über eine drahtbehaftete und/oder drahtlose Kommunikationsverbindung (KV) an das öffentliche Mobilfunknetzwerk (MCN) angeschlossen ist.

14. Zugangsrechner für eine private Funkzelle (HNB), die an ein öffentliches Funknetzwerk (MCN) angeschlossen ist, die dazu ausgebildet ist,
- ein, der Funkzelle unbekanntes Endgerät (EG) zu authentisieren;
- nach erfolgter Authentisierung des unbekannten Endgeräts (EG) eine erste Nachricht an ein, die private Funkzelle (HNB) verwaltendes mobiles Kommunikationsgerät (AEG) zu übertragen, mit welcher ersten Nachricht die Nutzung der privaten Funkzelle (HNB) durch das unbekannte Endgerät (EG) oder einer mit der privaten Funkzelle (HNB) verknüpften Anlage beantragt wird,
wobei der Zugangsrechner dazu ausgestaltet ist, die erste Nachricht innerhalb der privaten Funkzelle (HNB) oder über das öffentliche Funknetzwerk (MCN) an das verwaltende mobile Kommunikationsgerät (AEG) zu übertragen;
- eine von dem verwaltenden mobilen Kommunikationsgerät (AEG) ausgesendete zweite Nachricht zu empfangen und abhängig von dieser der beantragten Nutzung der privaten Funkzelle (HNB) durch das unbekannte Endgerät (EG) oder dessen Benutzer zu entsprechen oder die Nutzung zu verweigern, wobei es sich bei dem mobilen Kommunikationsgerät (AEG) um ein Mobilfunkendgerät handelt.

15. System zum entfernten Verwalten einer privaten Funkzelle (HNB), die an ein öffentliches Funknetzwerk (MCN) angeschlossen ist, umfassend
- einen Zugangsrechner gemäß Anspruch 14; und
- ein mobiles Kommunikationsgerät (AEG) zum Verwalten der privaten Funkzelle (HNB), wobei es sich bei dem mobilen Kommunikationsgerät (AEG) um ein Mobilfunkendgerät handelt.

## Claims

1. A method for remotely managing a private radio cell (HNB) which is connected to a public radio network (MCN), wherein
- an end device (EG) unknown to the radio cell authenticates itself vis-à-vis an access computer (ROU) of the private radio cell (HNB);
- after successful authentication of the unknown end device (EG), the access computer (ROU) transfers a first message to a mobile communication device (AEG) managing the private radio cell (HNB), said first message requesting the use of the private radio cell (HNB) by the unknown end device (EG) or of an installation linked with the private radio cell (HNB),
the access computer (ROU) being configured to transfer the first message to the managing mobile communication device (AEG) within the private radio cell (HNB) or via the public radio network (MCN);
- the managing mobile communication device (AEG) transfers to the access computer (ROU) or the unknown end device (EG) a second message permitting the use, when the requested use of the private radio cell (HNB) by the unknown end device (EG) or its user is complied with; and
- the requested use of the private radio cell (HNB) by the unknown end device (EG) or its user is refused when it is not complied with by the mobile communication device (AEG), the mobile communication device (AEG) being a mobile radio end device.

2. The method according to claim 1, wherein the unknown end device (EG) comprises a first application which manages the authentication process vis-à-vis the access computer (ROU) of the private radio cell (HNB).

3. The method according to claim 2, wherein the application is stored on a secure portable data carrier of the unknown end device.

4. The method according to any of the preceding claims, wherein the managing communication device (AEG) comprises a second application which manages an access permission for the private radio cell (HNB) and/or end devices (EG) approved for use of the radio cell.

5. The method according to any of the preceding claims, wherein for authentication of the unknown end device (EG) or its user by the access computer (ROU), data of the unknown end device (EG) and/or personal data of the user of the unknown end device (EG) are transferred to the access computer (ROU) and processed thereby.

6. The method according to any of the preceding claims, wherein end devices (EG) authenticated vis-à-vis the access computer (ROU) are stored in a list of the access computer (ROU).

7. The method according to any of the preceding claims, wherein a code query is effected during the authentication process by the end device (EG) as yet unknown to the access computer (ROU).

8. The method according to any of the preceding claims, wherein the access computer (ROU) is operated as a component of the installation linked with the private radio cell (HNB).

9. The method according to claim 8, wherein the installation is an access control system which is linked with the private radio cell (HNB).

10. The method according to claim 8 or 9, wherein the access computer (ROU) will transfer a second message to the managing communication device (AEG) for the administrator's information upon each use or upon each entry, when the installation linked with the private radio cell is repeatedly used or entered by an already authenticated end device (EG) repeatedly.

11. The method according to any of claims 8 to 10, wherein image data are additionally transferred to the access computer (ROU) in the first message.

12. The method according to any of the preceding claims, wherein the managed radio cell is a femtocell.

13. The method according to any of the preceding claims, wherein the private radio cell (HNB) is connected to the public mobile radio network (MCN) via a wired and/or wireless communication connection (KV).

14. An access computer for a private radio cell (HNB) which is connected to a public radio network (MCN) which is configured
- to authenticate an end device (EG) unknown to the radio cell;
- after successful authentication of the unknown end device (EG), to transfer a first message to a mobile communication device (AEG) managing the private radio cell (HNB), said first message requesting the use of the private radio cell (HNB) by the unknown end device (EG) or of an installation linked with the private radio cell (HNB);
the access computer (ROU) being configured to transfer the first message to the managing mobile communication device (AEG) within the private radio cell (HNB) or via the public radio network (MCN);
- to receive a second message emitted by the managing mobile communication device (AEG) and, in dependence thereon, to comply with the requested use of the private radio cell (HNB) by the unknown end device (EG) or its user or to refuse the use, the mobile communication device (AEG) being a mobile radio end device.

15. A system for remotely managing a private radio cell (HNB) which is connected to a public radio network (MCN), comprising
- an access computer according to claim 14; and
- a mobile communication device (AEG) for managing the private radio cell (HNB), the mobile communication device (AEG) being a mobile radio end device.

## Revendications

1. Procédé de gestion éloignée d'une cellule radio privée (HNB) raccordée à un réseau de radiocommunication public (MCN), dans lequel
- un terminal (EG) inconnu de la cellule radio s'authentifie vis-à-vis d'un ordinateur d'accès (ROU) de la cellule radio privée (HNB) ;
- l'ordinateur d'accès (ROU), après authentification aboutie du terminal (EG) inconnu, transmet à un appareil de communication mobile (AEG) gérant la cellule radio privée (HNB) un premier message par lequel l'utilisation de la cellule radio privée (HNB) par le terminal (EG) inconnu ou d'une installation reliée avec la cellule radio privée (HNB) est demandée,
l'ordinateur d'accès (ROU) étant configuré pour transmettre le premier message à l'intérieur de la cellule radio privée (HNB) ou, par l'intermédiaire du réseau de radiocommunication public (MCN), à l'appareil de communication mobile (AEG) gérant ;
- l'appareil de communication mobile (AEG) gérant transmet à l'ordinateur d'accès (ROU) ou au terminal (EG) inconnu un second message autorisant l'utilisation quand l'utilisation demandée de la cellule radio privée (HNB) par le terminal (EG) inconnu ou par son utilisateur est acceptée; et
- l'utilisation demandée de la cellule radio privée (HNB) par le terminal (EG) inconnu ou par son utilisateur est refusée quand elle n'est pas acceptée par l'appareil de communication mobile (AEG), l'appareil de communication mobile (AEG) étant un terminal de radiocommunication mobile.

2. Procédé selon la revendication 1, dans lequel le terminal (EG) inconnu comprend une première application qui gère le processus d'authentification vis-à-vis de l'ordinateur d'accès (ROU) de la cellule radio privée (HNB).

3. Procédé selon la revendication 2, dans lequel l'application est mémorisée sur un support de données portable sûr du terminal inconnu.

4. Procédé selon une des revendications précédentes, dans lequel l'appareil de communication (AEG) gérant comprend une seconde application qui gère une autorisation d'accès à la cellule radio privée (HNB) et/ou des terminaux (EG) admis à l'utilisation de la cellule radio.

5. Procédé selon une des revendications précédentes, dans lequel, pour l'authentification du terminal (EG) inconnu ou de son utilisateur par l'ordinateur d'accès (ROU), des données du terminal (EG) inconnu et/ou des données personnelles de l'utilisateur du terminal (EG) inconnu sont transmises à l'ordinateur d'accès (ROU) et traitées par ce dernier.

6. Procédé selon une des revendications précédentes, dans lequel des terminaux (EG) authentifiés vis-à-vis de l'ordinateur d'accès (ROU) sont mémorisés dans une liste de l'ordinateur d'accès (ROU).

7. Procédé selon une des revendications précédentes, dans lequel, pendant le processus d'authentification par le terminal (EG) encore inconnu de l'ordinateur d'accès (ROU), une demande du code a lieu.

8. Procédé selon une des revendications précédentes, dans lequel l'ordinateur d'accès (ROU) est exploité en tant que composant de l'installation reliée avec la cellule radio privée (HNB).

9. Procédé selon la revendication 8, dans lequel l'installation est un système de contrôle d'accès relié avec la cellule radio privée (HNB).

10. Procédé selon la revendication 8 ou 9, dans lequel l'ordinateur d'accès (ROU) va, lors de chaque utilisation ou lors de chaque entrée, transmettre un second message à l'appareil de communication (AEG) gérant pour l'information de l'administrateur quand, par un terminal (EG) déjà authentifié, l'installation reliée avec la cellule radio privée est, de manière réitérée, utilisée ou pénétrée de manière réitérée.

11. Procédé selon une des revendications de 8 à 10, dans lequel, dans le premier message, des données d'image sont en outre transmises à l'ordinateur d'accès (ROU).

12. Procédé selon une des revendications précédentes, dans lequel la cellule radio gérée est une cellule Femto.

13. Procédé selon une des revendications précédentes, dans lequel la cellule radio privée (HNB) est, par l'intermédiaire d'une connexion de communication (KV) avec fil et/ou sans fil, raccordée au réseau public de téléphonie mobile (MCN).

14. Ordinateur d'accès pour une cellule radio privée (HNB) raccordée à un réseau public réseau de radiocommunication (MCN) et configurée pour
- authentifier un terminal (EG) inconnu de la cellule radio ;
- après authentification aboutie du terminal (EG) inconnu, transmettre à un appareil de communication mobile (AEG) gérant la cellule radio privée (HNB) un premier message par lequel l'utilisation de la cellule radio privée (HNB) par le terminal (EG) inconnu ou d'une installation reliée avec la cellule radio privée (HNB) est demandée,
l'ordinateur d'accès étant configuré pour transmettre le premier message à l'intérieur de la cellule radio privée (HNB) ou, par l'intermédiaire du réseau de radiocommunication public (MCN), à l'appareil de communication mobile (AEG) gérant ;
- recevoir un second message envoyé par l'appareil de communication mobile (AEG) gérant et, en fonction de ce message, accepter l'utilisation demandée de la cellule radio privée (HNB) par le terminal (EG) inconnu ou par son utilisateur ou refuser l'utilisation, l'appareil de communication mobile (AEG) consistant en un terminal de radiocommunication mobile.

15. Système de gestion éloignée d'une cellule radio privée (HNB) raccordée à un réseau de radiocommunication public (MCN), comprenant
- un ordinateur d'accès selon la revendication 14; et
- un appareil de communication mobile (AEG) destiné à la gestion de la cellule radio privée (HNB), l'appareil de communication mobile (AEG) consistant en un terminal de radiocommunication mobile.
